# FASCICULE DE BREVET EUROPEEN

(11) **EP 2 825 463 B1**
(45) Date de publication et mention de la délivrance du brevet: **28.06.2017**
(21) Numéro de dépôt: 13704199.2
(22) Date de dépôt: 25.01.2013
(51) Int. Cl.: B64D 37/32

(54) **DISPOSITIF D'INERTAGE, RÉSERVOIR ET AÉRONEF MUNIS D'UN TEL DISPOSITIF ET PROCÉDÉ CORRESPONDANT**
INERTISIERUNGSVORRICHTUNG, TANK UND FLUGZEUG MIT EINER DERARTIGEN VORRICHTUNG SOWIE ENTSPRECHENDES VERFAHREN
INERTING DEVICE, TANK AND AIRCRAFT PROVIDED WITH SUCH A DEVICE, AND CORRESPONDING METHOD

(30) Priorité: 12.03.2012 FR 1252187
(43) Date de publication de la demande: 21.01.2015
(73) Titulaire: L'Air Liquide Société Anonyme pour l'Etude et l'Exploitation des Procédés Georges Claude, 75007 Paris (FR)
(72) Inventeur: TIGER, Xavier, 38000 Grenoble (FR)
(74) Mandataire: De Cuenca, Emmanuel Jaime
(86) Numéro de dépôt international: PCT/FR2013/050150
(87) Numéro de publication internationale: WO 2013/135981

(56) Documents cités:
- US-A- 3 590 559
- US-A- 3 628 758
- US-A- 3 788 039
- US-A1- 2002 158 167
- US-A1- 2011 068 231

## Description

La présente invention concerne un dispositif d'inertage, un réservoir et un aéronef munis d'un tel dispositif ainsi qu'un procédé correspondant.

L'invention concerne plus particulièrement un dispositif d'inertage pour un réservoir de carburant d'aéronef du type pressurisé, c'est-à-dire pour un réservoir muni d'une cuve principale et d'un volume de débordement distinct.

Un dispositif d'inertage peut être utilisé pour protéger un réservoir de carburant, notamment d'un aéronef tel qu'un avion ou un hélicoptère par exemple.

Un dispositif d'inertage remplace le ciel gazeux d'un réservoir par un gaz en enrichi en gaz inerte (azote) qui peut être produit par un générateur tel qu'un « OBIGGS ». Ces réservoirs sont généralement reliés à l'extérieur (l'atmosphère) via un volume de débordement (parfois appelé en anglais « venting box »). Le volume de débordement est un volume qui communique avec la cuve du réservoir contenant le carburant liquide mais ce volume de débordement ne contient pas de carburant liquide en situation normale.

Le document US8074932 concerne un système de distribution de gaz enrichi en azote dans un réservoir d'avion soumis à la pression ambiante. Selon ce document, lors des phases de descente de l'avion, du gaz enrichi en azote est injecté dans une chambre de mélange situé entre un réservoir d'aile communiquant et un réservoir de secours. Le réservoir d'aile communique avec un réservoir central tandis que le réservoir de secours communique avec l'extérieur via des ouvertures libres. Un capteur d'oxygène peut être prévu le cas échéant au sein des réservoirs d'aile afin que le système de distribution puisse déterminer si concentrations sont satisfaisantes.

Ce dispositif est satisfaisant en partie cependant il ne permet d'utiliser efficacement l'air enrichi en azote dans toutes les situations et nécessite un boite de mélange située entre deux réservoirs déportés. De plus, la détection de concentration d'oxygène est malaisée et ne donne pas une information pertinente pour s'assurer d'une concentration d'oxygène dans tout le réservoir. Enfin, cette architecture et ce fonctionnement sont mal adaptés à des réservoirs sous pression.

Le document US20110068231A1 décrit un aéronef dans lequel du gaz enrichi en azote est introduit dans une chambre de mélange durant la phase de descente tandis que la chambre de mélange est exposée à l'air ambiant, pour alimenter le réservoir de carburant avec ce mélange.

Le document US20020158167A1 décrit un dispositif pour inerter un réservoir de carburant d'aéronef dans lequel le débit et la teneur en oxygène du gaz fourni au réservoir de carburant sont modifiés selon que l'aéronef est en phase de descente ou en phase de croisière.

L'invention concerne plus précisément les réservoirs dits « sous pression ». C'est-à-dire que le volume de débordement communique avec l'atmosphère via deux orifices muni chacun d'un clapet anti-retour (« check valve » en anglais). Un premier clapet « d'ascension » s'ouvre pour faire sortir du gaz du réservoir uniquement lorsque la pression dans le volume de débordement excède la pression de l'atmosphère d'une valeur déterminée correspondant au tarage du clapet. Ceci permet de limiter la surpression du volume de débordement (et donc du réservoir) par rapport à la pression extérieure (en cas notamment d'ascension de l'aéronef).

Un second clapet « de descente » s'ouvre pour faire entrer du gaz dans le réservoir uniquement lorsque la pression de l'atmosphère excède la pression dans le volume de débordement d'une valeur déterminée correspondant au tarage du clapet. Ceci permet de conserver une sous-pression dans le volume de débordement (et donc dans le réservoir) par rapport à la pression extérieure (en cas notamment de descente de l'aéronef).

Généralement, ces réservoirs comportent plusieurs compartiments séparés par des cloisons munies d'ouvertures permettant des échanges de fluides. Idéalement, le gaz enrichi en azote est de préférence injecté en différents endroits du réservoir, de façon à homogénéiser autant que possible la concentration d'oxygène au sein du réservoir. Cependant, le point d'injection de gaz enrichi en azote est soumis à des contraintes antagonistes. En effet, lors d'une ascension de l'aéronef une partie du gaz du réservoir sort naturellement vers l'atmosphère à mesure que la pression atmosphérique diminue. Ainsi, pour optimiser la baisse de concentration en oxygène gazeux dans le réservoir, l'endroit le plus approprié pour injecter le gaz enrichi en azote doit être le plus éloigné possible de l'orifice de sortie commandé par le clapet d'ascension. En revanche, lors de
phases de descente de l'aéronef (ou de consommation importante de carburant) l'air atmosphérique est admis dans le réservoir via le clapet de descente et augmente le taux d'oxygène dans le réservoir (jusqu'à 21%). Dans cette situation, l'endroit le plus approprié pour injecter le gaz enrichi en azote doit être le plus près possible de l'orifice de sortie commandé par le clapet de descente. Ces deux contraintes sont donc contradictoires.

Un but de la présente invention est de pallier tout ou partie des inconvénients de l'art antérieur relevés ci-dessus.

A cette fin, le dispositif selon l'invention, par ailleurs conforme à la définition générique qu'en donne le préambule ci-dessus, est essentiellement caractérisé en ce que ,le dispositif comprend un générateur de gaz enrichi en azote, un circuit de transfert du gaz enrichi en azote produit par le générateur, le circuit de transfert comprenant une extrémité amont reliée au générateur, une première extrémité aval raccordable à la cuve principale et une seconde extrémité aval raccordable au volume de débordement, le dispositif comprenant un ensemble de capteurs de mesure d'une information représentative du différentiel de pression entre, d'une part, l'intérieur du volume de débordement et, d'autre part, l'extérieur du réservoir, le dispositif comprenant en outre une logique électronique recevant les mesures de l'ensemble de capteur(s), la logique électronique étant reliée au générateur et/ou au circuit de transfert et étant conformée pour commander la fourniture d'un flux de gaz enrichi en azote vers la seconde extrémité aval lorsque le différentiel de pression entre, d'une part, l'intérieur du volume de débordement et, d'autre part, l'extérieur, descend en dessous d'un seuil S déterminé.

Par ailleurs, des modes de réalisation de l'invention peuvent comporter l'une ou plusieurs des caractéristiques suivantes :
- la logique électronique est conformée pour commander la fourniture d'un flux de gaz enrichi en azote vers la seconde extrémité aval uniquement lorsque le différentiel de pression entre, d'une part, l'intérieur du volume de débordement et, d'autre part, l'extérieur du réservoir, descend en dessous du seuil déterminé,
- la seconde extrémité aval du circuit de transfert comprend une vanne de contrôle sélectif du débit de gaz enrichi en azote destiné à être fourni au volume de débordement, ladite vanne étant pilotée par la logique électronique,
- la première extrémité aval du circuit de transfert comprend une vanne de contrôle sélectif du débit de gaz enrichi en azote destiné à être fourni à la cuve principale, ladite vanne étant pilotée par la logique électronique,
- les première et seconde extrémités aval du circuit sont raccordées en parallèle à l'extrémité amont du circuit, le circuit comprenant une vanne à trois voies pour réguler sélectivement les flux de gaz enrichi en azote provenant du générateur entre les première et seconde extrémités aval, la vanne à trois voies étant pilotée par la logique électronique,
- l'un au moins parmi l'extrémité amont, la première extrémité aval, la seconde extrémité aval du circuit de transfert, comprend un clapet anti-retour empêchant une remontée de gaz de l'aval vers l'amont,
- l'un au moins parmi, la première extrémité aval, la seconde extrémité aval du circuit de transfert comprend un orifice calibré pour limiter le débit de gaz à une valeur déterminée,
- le générateur comprend un concentrateur du type à membrane de séparation.

L'invention concerne également un réservoir de carburant d'aéronef du type pressurisé, comprenant une cuve principale destinée à stocker du carburant liquide et un volume de débordement distinct, le volume de débordement étant relié fluidiquement avec la cuve principale pour absorber temporairement, sans les conserver, des débordements de carburant liquide de la cuve principale, le volume de débordement communiquant avec l'extérieur du réservoir via un système de deux clapets anti-retour ayant des sens d'ouverture inversés, dans lequel le réservoir de carburant comprend un dispositif d'inertage conforme à l'une quelconque caractéristiques ci-dessus ou ci-après, la première extrémité aval du circuit de transfert étant raccordée à la cuve principale et la seconde extrémité aval du circuit de transfert étant raccordée au volume de débordement.

Par ailleurs, des modes de réalisation de l'invention peuvent comporter l'une ou plusieurs des caractéristiques suivantes :
- le volume de débordement communique avec l'extérieur du réservoir via un clapet d'entrée conformé pour s'ouvrir uniquement lorsque le différentiel de pression entre d'une part l'intérieur (P3) du volume de débordement et, d'autre part, l'extérieur (PA) du réservoir, atteint un niveau d'ouverture déterminé (Y), la logique électronique étant configurée pour commander la fourniture d'un flux de gaz enrichi en azote au volume de débordement via la seconde extrémité aval lorsque le différentiel de pression (PA-P3) entre, d'une part, l'intérieur du volume de débordement et, d'autre part, l'extérieur est compris entre 70% et 100% dudit niveau d'ouverture (PA- P3>70%Y),
- la logique électronique est configurée pour commander la fourniture d'un flux de gaz enrichi en azote au volume de débordement via la seconde extrémité aval lorsque différentiel de pression (P3-Pa) entre, d'une part, l'intérieur du volume de débordement et, d'autre part, l'extérieur du réservoir, s'approche de 50mbar ou atteint le niveau suffisant à l'ouverture du clapet d'entrée,

- l'ensemble de capteurs de mesure d'une information représentative du différentiel de pression (P3-Pa) entre, d'une part, l'intérieur du volume de débordement et, d'autre part, l'extérieur du réservoir, comprend au moins un capteur de pression,
- le circuit de transfert est intégré au générateur et/ou au réservoir,
- la seconde extrémité aval du circuit de transfert est raccordée au niveau d'un conduit de dégazage du volume de débordement, c'est-à-dire au niveau d'un conduit assurant la communication entre le volume de débordement et l'extérieur du réservoir.

L'invention concerne également un aéronef comprenant un réservoir de carburant selon l'une quelconque des caractéristiques ci-dessus ou ci-après, dans lequel l'ensemble de capteur(s) de mesure d'une information représentative du différentiel de pression (P3-Pa) entre, d'une part, l'intérieur du volume de débordement et, d'autre part, l'extérieur du réservoir, comprend au moins l'un parmi : un capteur de pression différentiel, un couple de capteurs de pression, un capteur d'altitude de l'aéronef, un capteur de la pression atmosphérique autour de l'aéronef, un capteur de température atmosphérique autour de l'aéronef, un capteur de vitesse de descente de l'aéronef, un capteur de consommation de carburant de l'aéronef, un capteur de pression de l'air d'entrée alimentant le générateur en vue de son enrichissement en azote, un capteur de température de l'air d'entrée alimentant le générateur en vue de son enrichissement en azote, un capteur de débit de gaz enrichi en azote en sortie du générateur, un capteur de concentration d'oxygène/azote du flux de gaz enrichi en azote en sortie du générateur, un capteur de débit de gaz enrichi en azote en sortie d'un réservoir tampon stockant le gaz enrichi en azote produit par le générateur, un capteur de concentration d'oxygène/azote du flux de gaz enrichi en sortie d'un réservoir tampon stockant le gaz enrichi en azote produit par le générateur.

L'invention concerne également un procédé d'inertage d'un réservoir de carburant d'aéronef du type pressurisé, c'est-à-dire d'un réservoir muni d'une cuve principale et d'un volume de débordement sous pression distinct, dans lequel l'inertage est réalisé via un dispositif d'inertage comprenant un générateur de gaz enrichi en azote, le procédé comprenant une étape de détermination d'un différentiel de pression (P3-Pa) entre, d'une part, l'intérieur du volume de débordement et, d'autre part, l'extérieur du réservoir, et, lorsque, ce différentiel de pression (P3-Pa) descend en dessous d'un seuil S déterminé, une étape de transfert d'un flux de gaz enrichi en azote dans le volume de débordement.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle, illustrant la structure et le fonctionnement d'un dispositif d'inertage selon un premier exemple de réalisation possible de l'invention,
- la figure 2 représente une vue schématique et partielle, illustrant la structure et le fonctionnement d'un dispositif d'inertage selon un second exemple de réalisation possible de l'invention,
- la figure 3 représente une vue schématique et partielle, illustrant la structure et le fonctionnement d'un dispositif d'inertage selon un troisième exemple de réalisation possible de l'invention,
- la figure 4 représente une vue schématique et partielle, illustrant la structure et le fonctionnement d'un dispositif d'inertage selon un quatrième exemple de réalisation possible de l'invention,
- la figure 5 représente une vue schématique et partielle, illustrant la structure et le fonctionnement d'un dispositif d'inertage selon un cinquième exemple de réalisation possible de l'invention.

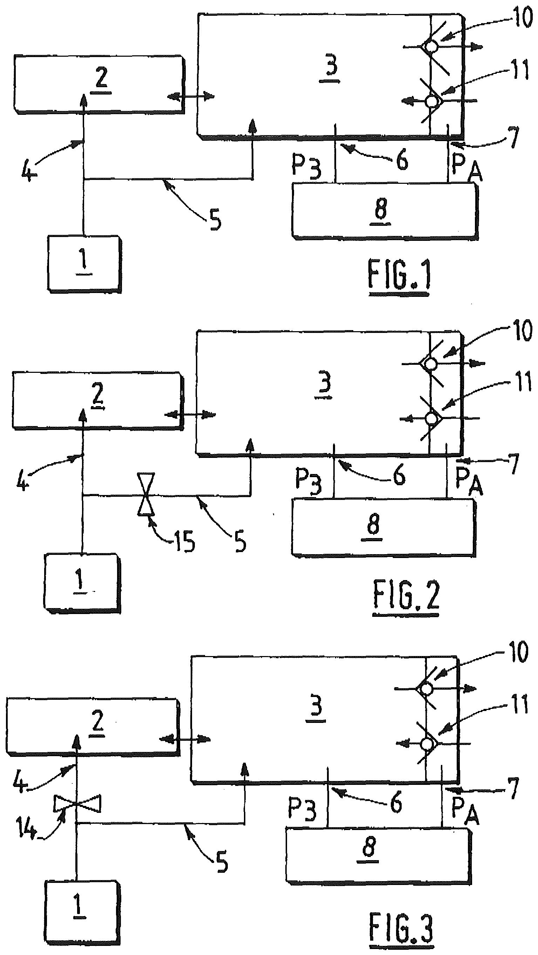

La figure 1 illustre un dispositif d'inertage de réservoir de carburant d'un aéronef.

Le réservoir de l'aéronef comprend une cuve 2 principale destinée à contenir le carburant liquide et un volume 3 de débordement distinct.

Le volume 3 de débordement communique fluidiquement avec la cuve 2 principale (la communication est symbolisée par deux flèches sur la figure).

Le volume 3 de débordement ne contient pas de carburant liquide en situation normale mais peut absorber les débordements en cours de remplissage ou lors de certains mouvements.

Le réservoir est du type « sous pression », c'est-à-dire que le volume 3 de débordement communique avec l'atmosphère extérieure via deux orifices muni chacun d'un clapet anti-retour (« check valve » en anglais). Un premier clapet 10 « d'ascension » s'ouvre uniquement lorsque la pression dans le volume 3 de débordement excède la pression de l'atmosphère d'une valeur déterminée correspondant au tarage du clapet 10 (la figure 1 comporte une flèche qui symbolise la sortie possible du gaz hors du volume 3 de débordement).

Un second clapet 11 « de descente » s'ouvre uniquement lorsque la pression de l'atmosphère de débordement excède la pression dans le volume 3 de débordement d'une valeur déterminée correspondant au tarage du clapet 11 (la figure 1 comporte une flèche qui symbolise l'entrée du gaz dans le volume 3 de débordement). De cette façon, le système de clapets 10, 11 maintient dans le volume 3 de débordement (et dans la cuve 2 principale) une différence de pression (positive ou négative) déterminée.

Ainsi, lorsque l'aéronef est à une altitude élevée (par exemple au dessus de 4000m), la pression dans le réservoir est égale à la pression atmosphérique extérieure plus la valeur de pression nécessaire à l'ouverture du clapet 10 d'ascension. Le clapet 11 de descente est fermé et le clapet 10 d'ascension est ouvert. Lorsque commence une baisse d'altitude de l'aéronef, la pression au sein du réservoir diminue progressivement, le clapet 10 d'ascension se ferme alors, les deux clapets 10, 11 sont alors fermés. Lors de la descente, lorsque la pression dans le réservoir atteint la pression atmosphérique moins la valeur d'ouverture du clapet 11 de descente, ce denier s'ouvre et laisse entrer de l'air.

Le dispositif comprend un générateur 1 de gaz enrichi en azote, par exemple un séparateur à membrane et/ou une réserve d'azote sous pression ou tout autre appareil approprié, et un circuit 4, 5 de transfert du gaz enrichi en azote produit par le générateur 1. Le circuit 4, 5 de transfert comprend une extrémité amont reliée au générateur 1, une première extrémité aval 4 raccordée fluidiquement à la cuve 2 principale et une seconde extrémité aval 5 raccordée au volume 3 de débordement.

Ainsi, le gaz enrichi en azote produit par le générateur 1 est fourni sélectivement et simultanément à la cuve principale 2 et au volume 3 de débordement. Le dispositif comprend un ensemble de capteur(s) 6, 7 de mesure d'une information représentative du différentiel de pression P3-Pa entre, d'une part, l'intérieur du volume 3 de débordement et, d'autre part, l'extérieur du réservoir. L'ensemble de capteur(s) est relié à une logique 8 électronique. La logique 8 électronique est reliée au générateur 1 et/ou au circuit 4, 5 de transfert et est configurée pour commander la fourniture d'un flux de gaz enrichi en azote au réservoir et en particulier au volume 3 de débordement lorsque le différentiel de pression P3-Pa entre, d'une part, l'intérieur du volume 3 de débordement et, d'autre part, l'extérieur, descend en dessous d'un seuil S déterminé.

Plus précisément, la logique 8 électronique peut ainsi déterminer le moment où la pression dans le réservoir décroît et atteint une valeur déterminée proche ou égale à la valeur nécessaire à l'ouverture du clapet 11 de descente. Ceci permet de déterminer lorsque de l'air pénètre ou va pénétrer dans le réservoir.

Sur la base de ces données, la logique 8 électronique peut commander l'injection d'azote dans le réservoir au moment ou peu avant que de l'air ne pénètre dans le réservoir.

Par exemple, le clapet 10 de descente ne s'ouvre que lorsque la pression atmosphérique extérieure excède la pression dans le réservoir d'une valeur comprise entre 0.1psi (689 Pa) et 5.0psi (34474 Pa). Par exemple, l'injection d'azote dans le volume 3 de débordement est réalisée lorsque la pression atmosphérique extérieure excède la pression dans le réservoir d'une valeur comprise entre 0.1 psi (689 Pa) et 5.0psi (34474 Pa).

L'ensemble de capteur(s) de mesure d'une information représentative du différentiel de pression P3-Pa entre, d'une part, l'intérieur du volume 3 de débordement et, d'autre part, l'extérieur du réservoir, peut comprendre, par exemple, au moins un capteur de pression. Par exemple, et comme illustré à la figure 1, deux capteurs6, 7 peuvent mesurer la pression P3, PA respectivement dans le volume 3 de débordement et à l'extérieur du réservoir. Les deux capteurs 6, 7 mesurent ainsi une pression différentielle.

Bien entendu, l'ensemble de capteur(s) de mesure d'une information représentative du différentiel de pression P3-Pa n'est pas limité à cette forme de réalisation. Ainsi, l'ensemble de capteur(s) peut comprendre l'un au moins parmi un capteur de pression différentiel, un couple de capteurs de pression, un capteur d'altitude de l'aéronef, un capteur de la pression atmosphérique autour de l'aéronef, un capteur de température atmosphérique autour de l'aéronef, un capteur de vitesse de descente de l'aéronef, un capteur de consommation de carburant de l'aéronef, un capteur de pression de l'air d'entrée alimentant le générateur en vue de son enrichissement en azote, un capteur de température de l'air d'entrée alimentant le générateur en vue de son enrichissement en azote, un capteur de débit de gaz enrichi en azote en sortie du générateur, un capteur de concentration d'oxygène/azote du flux de gaz enrichi en azote en sortie du générateur 1, un capteur de débit de gaz enrichi en azote en sortie d'un réservoir tampon stockant le gaz enrichi en azote produit par le générateur 1, un capteur de concentration d'oxygène/azote du flux de gaz enrichi en sortie d'un réservoir tampon stockant le gaz enrichi en azote produit par le générateur 1.

De façon générale, tout dispositif permettant détecter l'entrée d'air dans le réservoir ou l'imminence d'une entrée d'air du fait d'une baisse de pression relative dans le réservoir par rapport à l'extérieur peut être utilisé pour commander la fourniture de gaz enrichi en azote au volume 3 de débordement. De cette façon, le dispositif permet d'éviter la remontée du taux d'oxygène dans le réservoir avant et/ou pendant l'entrée d'air dans le volume 3 de débordement.

Les figures 2 à 5 illustrent des variantes de réalisation possibles de l'invention. Par soucis de concision, les éléments identiques à ceux décrits ci-dessus sont désignés par les mêmes références numériques et ne sont pas décrits une seconde fois.

Le mode de réalisation de la figure 2 se distingue de celui de la figure 1 uniquement en ce que la seconde extrémité aval 5 du circuit de transfert comprend une vanne 15 de contrôle sélectif du débit de gaz enrichi en azote destiné à être fourni au volume 3 de débordement. De préférence ladite vanne 15 est pilotée par la logique 8 électronique pour contrôler le gaz enrichi fourni au volume 3 de débordement. La vanne est du type tout ou rien ou proportionnelle. De cette façon, le gaz enrichi en azote est toujours injectée dans la cuve 2 principale mais l'injection dans le volume 3 de débordement n'a lieu que lorsque c'est nécessaire (lors ou avant une entrée d'air).

Le mode de réalisation de la figure 3 se distingue de celui de la figure 1 uniquement en ce que la première extrémité aval 4 du circuit de transfert comprend une vanne 14 de contrôle sélectif du débit de gaz enrichi en azote destiné à être fourni à la cuve 2 principale. Cette vanne 14 (du type tout ou rien ou proportionnelle) est de préférence pilotée par la logique 8 électronique.

De cette façon, le gaz enrichi en azote est toujours injectée dans le volume 3 de débordement mais l'injection dans la cuve 2 principale n'a lieu que lorsque c'est requis.

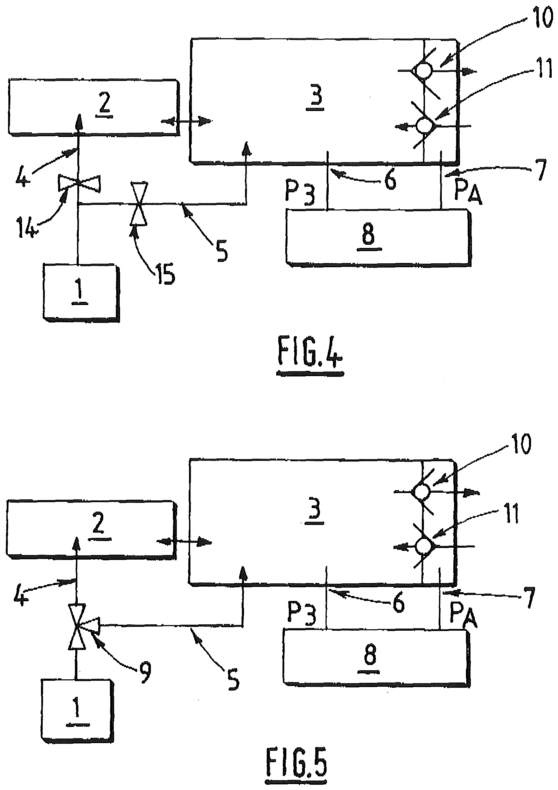

Dans le mode de réalisation de la figure 4, la première 4 et la seconde extrémité 5 aval comportent chacune une vanne 14, 15 de contrôle respective. Ceci permet de contrôler les quantités de gaz enrichi en azote fournis indépendamment à la cuve 2 principale et au volume 3 de débordement.

Selon la forme de réalisation de la figure 5, une vanne 9 à trois voies est prévue sur le circuit pour réguler sélectivement les flux de gaz enrichi en azote provenant du générateur 1 entre les première 4 et seconde 5 extrémités aval. De préférence, cette vanne 9 à trois voies ne permet pas la fourniture de gaz enrichi en azote en même temps aux deux extrémités aval mais à l'une ou l'autre alternativement.

Les caractéristiques structurelles des modes de réalisation ci-dessus peuvent être combinées le cas échéant.

De même, pour chacun des modes de réalisation ci-dessus, il est possible de prévoir un clapet anti-retour sur la première extrémité 4 aval et/ou la seconde extrémité 5 aval du circuit de transfert, de façon à empêcher une remontée de gaz de l'aval vers l'amont.

De plus, un orifice calibré peut être prévu sur la première extrémité 4 aval et/ou sur la seconde extrémité 5 aval du circuit de transfert pour limiter le débit de gaz à une valeur déterminée.

En outre, le circuit de transfert peut être intégré physiquement au générateur 1 et/ou au réservoir.

Selon une autre particularité possible, la seconde extrémité 5 aval du circuit de transfert peut être raccordée au niveau d'un conduit de dégazage du volume 3 de débordement, c'est-à-dire au niveau d'un conduit assurant la communication entre le volume 3 de débordement et l'extérieur du réservoir.

## Revendications

1. Dispositif d'inertage pour un réservoir de carburant d'aéronef du type pressurisé, c'est-à-dire pour un réservoir muni d'un cuve (2) principale et d'un volume (3) de débordement distinct, le dispositif comprenant un générateur (1) de gaz enrichi en azote, un circuit (4, 5) de transfert du gaz enrichi en azote produit par le générateur (1), le circuit (4, 5) de transfert comprenant une extrémité amont reliée au générateur (1), une première extrémité aval (4) raccordable à la cuve (2) principale et une seconde extrémité aval (5) raccordable au volume (3) de débordement, le dispositif comprenant un ensemble de capteurs (6, 7) de mesure d'une information représentative du différentiel de pression (P3-Pa) entre, d'une part, l'intérieur du volume (3) de débordement et, d'autre part, l'extérieur du réservoir, le dispositif comprenant en outre une logique (8) électronique recevant les mesures de l'ensemble de capteur(s) (6, 7), la logique (8) électronique étant reliée au générateur (1) et/ou au circuit (4, 5) de transfert et étant conformée pour commander la fourniture d'un flux de gaz enrichi en azote vers la seconde extrémité aval (5) lorsque le différentiel de pression (P3-Pa) entre, d'une part, l'intérieur du volume (3) de débordement et, d'autre part, l'extérieur, descend en dessous d'un seuil S déterminé.

2. Dispositif selon la revendication 1, **caractérisé en ce que** la logique (8) électronique est conformée pour commander la fourniture d'un flux de gaz enrichi en azote vers la seconde extrémité aval (5) uniquement lorsque le différentiel de pression (P3-Pa) entre, d'une part, l'intérieur du volume (3) de débordement et, d'autre part, l'extérieur du réservoir, descend en dessous du seuil déterminé.

3. Dispositif selon la revendication 1 ou 2, **caractérisé en ce que** la seconde extrémité aval (5) du circuit de transfert comprend une vanne (15) de contrôle sélectif du débit de gaz enrichi en azote destiné à être fourni au volume (3) de débordement, ladite vanne (15) étant pilotée par la logique (8) électronique.

4. Dispositif selon l'une quelconque des revendications 1 à 3, **caractérisé en ce que** la première extrémité aval (4) du circuit de transfert comprend une vanne (14) de contrôle sélectif du débit de gaz enrichi en azote destiné à être fourni à la cuve (2) principale, ladite vanne (14) étant pilotée par la logique (8) électronique.

5. Dispositif selon l'une quelconque des revendications 1 à 4, **caractérisé en ce que** les première (4) et seconde (5) extrémités aval du circuit sont raccordées en parallèle à l'extrémité amont du circuit, le circuit comprenant une vanne (9) à trois voies pour réguler sélectivement les flux de gaz enrichi en azote provenant du générateur (1) entre les première (4) et seconde (5) extrémités aval, la vanne (9) à trois voies étant pilotée par la logique (8) électronique.

6. Réservoir de carburant d'aéronef du type pressurisé, comprenant une cuve (2) principale destinée à stocker du carburant liquide et un volume (3) de débordement distinct, le volume (3) de débordement étant relié fluidiquement avec la cuve (2) principale pour absorber temporairement, sans les conserver, des débordements de carburant liquide de la cuve (2) principale, le volume (3) de débordement communiquant avec l'extérieur du réservoir via un système de deux clapets (10, 11) anti-retour ayant des sens d'ouverture inversés, **caractérisé en ce que** le réservoir de carburant comprend un dispositif d'inertage conforme à l'une quelconque revendications 1 à 6, la première extrémité aval (4) du circuit de transfert étant raccordée à la cuve (2) principale et la seconde extrémité aval (5) du circuit de transfert étant raccordée au volume (3) de débordement.

7. Réservoir selon la revendication 6, **caractérisé en ce que** le volume (3) de débordement communique avec l'extérieur du réservoir via un clapet (11) d'entrée conformé pour s'ouvrir uniquement lorsque le différentiel de pression entre d'une part l'intérieur (P3) du volume (3) de débordement et, d'autre part, l'extérieur (PA) du réservoir, atteint un niveau d'ouverture déterminé (Y), et **en ce que** la logique (8) électronique est configurée pour commander la fourniture d'un flux de gaz enrichi en azote au volume (3) de débordement via la seconde extrémité aval (5) lorsque le différentiel de pression (PA-P3) entre, d'une part, l'intérieur du volume (3) de débordement et, d'autre part, l'extérieur et compris entre 70% et 100% dudit niveau d'ouverture (PA- P3>70%Y).

8. Réservoir selon la revendication 7, **caractérisé en ce que** la logique (8) électronique est configurée pour commander la fourniture d'un flux de gaz enrichi en azote au volume (3) de débordement via la seconde extrémité aval (5) lorsque différentiel de pression (P3-Pa) entre, d'une part, l'intérieur du volume (3) de débordement et, d'autre part, l'extérieur du réservoir, s'approche de 50mbar ou atteint le niveau suffisant à l'ouverture du clapet (11) d'entrée.

9. Réservoir selon l'une quelconque des revendications 6 à 8, **caractérisé en ce que** l'ensemble de capteurs (6, 7) de mesure d'une information représentative du différentiel de pression (P3-Pa) entre, d'une part, l'intérieur du volume (3) de débordement et, d'autre part, l'extérieur du réservoir, comprend au moins un capteur de pression.

10. Aéronef comprenant un réservoir de carburant selon l'une quelconque des revendications 6 à 8, **caractérisé en ce que** l'ensemble de capteur(s) (6, 7) de mesure d'une information représentative du différentiel de pression (P3-Pa) entre, d'une part, l'intérieur du volume (3) de débordement et, d'autre part, l'extérieur du réservoir, comprend au moins l'un parmi : un capteur de pression différentiel, un couple de capteurs de pression, un capteur d'altitude de l'aéronef, un capteur de la pression atmosphérique autour de l'aéronef, un capteur de température atmosphérique autour de l'aéronef, un capteur de vitesse de descente de l'aéronef, un capteur de consommation de carburant de l'aéronef, un capteur de pression de l'air d'entrée alimentant le générateur en vue de son enrichissement en azote, un capteur de température de l'air d'entrée alimentant le générateur en vue de son enrichissement en azote, un capteur de débit de gaz enrichi en azote en sortie du générateur, un capteur de concentration d'oxygène/azote du flux de gaz enrichi en azote en sortie du générateur (1), un capteur de débit de gaz enrichi en azote en sortie d'un réservoir tampon stockant le gaz enrichi en azote produit par le générateur (1), un capteur de concentration d'oxygène/azote du flux de gaz enrichi en sortie d'un réservoir tampon stockant le gaz enrichi en azote produit par le générateur (1).

11. Procédé d'inertage d'un réservoir de carburant d'aéronef du type pressurisé, c'est-à-dire d'un réservoir muni d'une cuve (2) principale et d'un volume (3) de débordement sous pression distinct, dans lequel l'inertage est réalisé via un dispositif d'inertage comprenant un générateur (1) de gaz enrichi en azote, le procédé comprenant une étape de détermination d'un différentiel de pression (P3-Pa) entre, d'une part, l'intérieur du volume (3) de débordement et, d'autre part, l'extérieur du réservoir, et, lorsque, ce différentiel de pression (P3-Pa) descend en dessous d'un seuil S déterminé, une étape de transfert d'un flux de gaz enrichi en azote dans le volume (3) de débordement.

## Patentansprüche

1. Vorrichtung zur Inertisierung für einen Treibstofftank eines Luftfahrzeugs, der Art, dass er unter Druck steht, das heißt für einen Tank, der mit einem Hauptbehälter (2) und einem unabhängigen Überlaufvolumen (3) versehen ist, wobei die Vorrichtung einen Generator (1) für mit Stickstoff angereichertes Gas, einen Kreislauf (4, 5) zum Übertragen des mit Stickstoff angereicherten Gases, das vom Generator (1) erzeugt wird, umfasst, wobei der Kreislauf (4, 5) zum Übertragen ein stromaufwärts befindliches Ende umfasst, das mit dem Generator (1) verbunden ist, ein erstes stromabwärts befindliches Ende (4), das an den Hauptbehälter (2) angeschlossen werden kann, und ein zweites stromabwärts befindliches Ende (5), das an das Überlaufvolumen (3) angeschlossen werden kann, wobei die Vorrichtung eine Einheit von Sensoren (6, 7) zum Messen einer repräsentativen Information der Druckdifferenz (P3-Pa) zwischen einerseits dem Inneren des Überlaufvolumens (3) und andererseits dem Äußeren des Tanks umfasst, wobei die Vorrichtung darüber hinaus eine elektronische Logik (8) umfasst, die die Messwerte der Einheit des (der) Sensors(-en) (6, 7) empfängt, wobei die elektronische Logik (8) mit dem Generator (1) und/ oder dem Kreislauf (4, 5) zum Übertragen verbunden ist, und ausgebildet ist, um die Bereitstellung einer Strömung eines mit Stickstoff angereicherten Gases zum zweiten stromabwärts befindlichen Ende (5) zu steuern, wenn die Druckdifferenz (P3-Pa) zwischen einerseits dem Inneren des Überlaufvolumens (3) und andererseits dem Äußeren unter einen bestimmten Schwellenwert S sinkt.

2. Vorrichtung nach Anspruch 1, **dadurch gekennzeichnet, dass** die elektronische Logik (8) ausgebildet ist, um die Bereitstellung einer Strömung eines mit Stickstoff angereicherten Gases zum zweiten stromabwärts befindlichen Ende (5) nur dann zu steuern, wenn die Druckdifferenz (P3-Pa) zwischen einerseits dem Inneren des Überlaufvolumens (3) und andererseits dem Äußeren des Tanks unter den bestimmten Schwellenwert sinkt.

3. Vorrichtung nach Anspruch 1 oder 2, **dadurch gekennzeichnet, dass** das zweite stromabwärts befindliche Ende (5) des Kreislaufs zum Übertragen ein Ventil (15) zur selektiven Kontrolle des Durchflusses eines mit Stickstoff angereicherten Gases umfasst, das dazu bestimmt ist, dem Überlaufvolumen (3) bereitgestellt zu werden, wobei das Ventil (15) durch die elektronische Logik (8) angesteuert wird.

4. Vorrichtung nach irgendeinem der Ansprüche 1 bis 3, **dadurch gekennzeichnet, dass** das erste stromabwärts befindliche Ende (4) des Kreislaufs zum Übertragen ein Ventil (14) zur selektiven Kontrolle des Durchflusses eines mit Stickstoff angereicherten Gases umfasst, das dazu bestimmt ist, dem Hauptbehälter (2) bereitgestellt zu werden, wobei das Ventil (14) durch die elektronische Logik (8) angesteuert wird.

5. Vorrichtung nach irgendeinem der Ansprüche 1 bis 4, **dadurch gekennzeichnet, dass** das erste (4) und das zweite (5) stromabwärts befindliche Ende des Kreislaufs parallel an das stromaufwärts befindliche Ende des Kreislaufs angeschlossen sind, wobei der Kreislauf ein Dreiwegeventil (9) umfasst, um selektiv die Ströme eines mit Stickstoff angereicherten Gases, das aus dem Generator (1) stammt, zwischen dem ersten (4) und dem zweiten (5) stromabwärts befindlichen Ende zu regeln, wobei das Dreiwegeventil (9) durch die elektronische Logik (8) angesteuert wird.

6. Treibstofftank eines Luftfahrzeugs, der Art, dass er unter Druck steht, einen Hauptbehälter (2) umfassend, der dazu bestimmt ist, flüssigen Treibstoff zu lagern, und ein unabhängiges Überlaufvolumen (3), wobei das Überlaufvolumen (3) fluidtechnisch mit dem Hauptbehälter (2) verbunden ist, um vorübergehend, ohne sie zu behalten, die Überläufe eines flüssigen Treibstoffes aus dem Hauptbehälter (2) zu absorbieren, wobei das Überlaufvolumen (3) über ein System mit zwei Rückschlagventilen (10, 11) mit dem Äußeren des Tanks kommuniziert, die umgekehrte Öffnungsrichtungen aufweisen, **dadurch gekennzeichnet, dass** der Treibstofftank eine Vorrichtung zur Inertisierung nach irgendeinem der Ansprüche 1 bis 6 umfasst, wobei das erste stromabwärts befindliche Ende (4) des Kreislaufs zum Übertragen an den Hauptbehälter (2) angeschlossen ist und das zweite stromabwärts befindliche Ende (5) des Kreislaufs zum Übertragen an das Überlaufvolumen (3) angeschlossen ist.

7. Tank nach Anspruch 6, **dadurch gekennzeichnet, dass** das Überlaufvolumen (3) über eine Einlassklappe (11) mit dem Äußeren des Tanks kommuniziert, die ausgebildet ist, um sich nur dann zu öffnen, wenn die Druckdifferenz zwischen einerseits dem Inneren (P3) des Überlaufvolumens (3) und andererseits dem Äußeren (PA) des Tanks ein bestimmtes Öffnungsniveau (Y) erreicht, und dadurch, dass die elektronische Logik (8) konfiguriert ist, um die Bereitstellung einer Strömung eines mit Stickstoff angereicherten Gases für das Überlaufvolumen (3) über das zweite stromabwärts befindliche Ende (5) zu steuern, wenn die Druckdifferenz (PA-P3) zwischen einerseits dem Inneren des Überlaufvolumens (3) und andererseits dem Äußeren zwischen 70% und 100% des Öffnungsniveaus (PA-P3>70%Y) enthalten ist.

8. Tank nach Anspruch 7, **dadurch gekennzeichnet, dass** die elektronische Logik (8) konfiguriert ist, um die Bereitstellung einer Strömung eines mit Stickstoff angereicherten Gases für das Überlaufvolumen (3) über das zweite stromabwärts befindliche Ende (5) zu steuern, wenn sich die Druckdifferenz (P3-Pa) zwischen einerseits dem Inneren des Überlaufvolumens (3) und andererseits dem Äußeren des Tanks 50 mbar annähert oder das Niveau erreicht, das für die Öffnung der Einlassklappe (11) ausreichend ist.

9. Tank nach irgendeinem der Ansprüche 6 bis 8, **dadurch gekennzeichnet, dass** die Einheit von Sensoren (6, 7) zum Messen einer repräsentativen Information der Druckdifferenz (P3-Pa) zwischen einerseits dem Inneren des Überlaufvolumens (3) und andererseits dem Äußeren des Tanks zumindest einen Drucksensor umfasst.

10. Luftfahrzeug, einen Treibstofftank nach irgendeinem der Ansprüche 6 bis 8 umfassend, **dadurch gekennzeichnet, dass** die Einheit des (der) Sensors(-en) (6, 7) zum Messen einer repräsentativen Information der Druckdifferenz (P3-Pa) zwischen einerseits dem Inneren des Überlaufvolumens (3) und andererseits dem Äußeren des Tanks zumindest eines umfasst aus: einem Differenzdrucksensor, einem Drucksensorpaar, einem Höhensensor des Luftfahrzeugs, einem Atmosphärendrucksensor um das Luftfahrzeug, einem Atmosphärentemperatursensor um das Luftfahrzeug, einem Sinkgeschwindigkeitssensor des Luftfahrzeugs, einem Treibstoffverbrauchssensor des Luftfahrzeugs, einem Drucksensor für die einströmende Luft zur Versorgung des Generators im Hinblick auf deren Anreicherung mit Stickstoff, einem Temperatursensor für die einströmende Luft zur Versorgung des Generators im Hinblick auf deren Anreicherung mit Stickstoff, einem Durchflusssensor eines mit Stickstoff angereicherten Gases am Auslauf des Generators (1), einem Durchflusssensor eines mit Stickstoff angereicherten Gases am Auslauf eines Puffertanks, der das vom Generator (1) erzeugte, mit Stickstoff angereicherte Gas lagert, einem Konzentrationssensor für Sauerstoff/Stickstoff der Strömung eines mit Stickstoff angereicherten Gases am Auslauf eines Puffertanks, der das vom Generator (1) erzeugte, mit Stickstoff angereicherte Gas lagert.

11. Verfahren zur Inertisierung eines Treibstofftanks eines Luftfahrzeugs, der Art, dass er unter Druck steht, das heißt für einen Tank, der mit einem Hauptbehälter (2) und einem unter Druck stehenden unabhängigen Überlaufvolumen (3) versehen ist, wobei die Inertisierung über eine Vorrichtung zur Inertisierung durchgeführt wird, die einen Generator (1) für mit Stickstoff angereichertes Gas umfasst, wobei das Verfahren einen Schritt zur Bestimmung einer Druckdifferenz (P3-Pa) zwischen einerseits dem Inneren des Überlaufvolumens (3) und andererseits dem Äußeren des Tanks umfasst, und wenn diese Druckdifferenz (P3-Pa) unter einen bestimmten Schwellenwert S sinkt, einen Schritt zum Übertragen einer Strömung eines mit Stickstoff angereichertes Gases in das Überlaufvolumen (3).

## Claims

1. Inerting device for a pressurised aircraft fuel tank, i.e. for a tank provided with a main vessel (2) and a separate overflow space (3), the device including a generator (1) of nitrogen-enriched gas, a circuit (4, 5) for transferring the nitrogen-enriched gas produced by the generator (1), the transfer circuit (4, 5) including an upstream end connected to the generator (1), a first downstream end (4) which can be coupled to the main vessel (2) and a second downstream end (5) which can be coupled to the overflow space (3), the device including a sensor array (6, 7) for measuring information representative of the pressure differential (P3-Pa) between, on the one hand the interior of the overflow space (3) and on the other hand the exterior of the tank, the device further including an electronic logic unit (8) receiving the measurements from the sensor array (6, 7), the electronic logic unit (8) being connected to the generator (1) and/or to the transfer circuit (4, 5), and being designed to control the supply of a nitrogen-enriched gas flow to the second downstream end (5) when the pressure differential (P3-Pa) between, on the one hand the interior of the overflow space (3) and on the other hand the exterior drops below a predetermined threshold S.

2. Device according to claim 1, **characterised in that** the electronic logic unit (8) is designed to supply the flow of a nitrogen-enriched gas to the second downstream end (5) only when the pressure differential (P3-Pa) between, on the one hand the interior of the overflow space (3) and on the other hand the exterior of the tank falls below the predetermined threshold.

3. Device according to either claim 1 or claim 2, **characterised in that** the second downstream end (5) of the transfer circuit comprises a control valve (15) for the selective control of the flow of nitrogen-enriched gas intended to be supplied to the overflow space (3), said valve (15) being operated by the electronic logic unit (8).

4. Device according to any one of claims 1 to 3, **characterised in that** the first downstream end (4) of the transfer circuit comprises a control valve (14) for the selective control of the flow of nitrogen-enriched gas intended to be supplied to the main vessel (2), said valve (14) being operated by the electronic logic unit (8).

5. Device according to any one of claims 1 to 4, **characterised in that** the first (4) and second (5) downstream ends of the circuit are coupled in parallel to the upstream end of the circuit, the circuit comprising a three-way valve (9) for the selective regulation of the flows of nitrogen-enriched gas originating from the generator (1) to the first (4) and the second (5) downstream ends, the three-way valve (9) being operated by the electronic logic unit (8).

6. Pressurised aircraft fuel tank, comprising a main vessel (2) intended to store liquid fuel, and a separate overflow space (3), the overflow space (3) being fluidly connected to the main vessel (2) in order to absorb temporarily, but without retaining, any overflows of liquid fuel from the main vessel (2), the overflow space (3) communicating with the exterior of the tank via a system of two non-return valves (10, 11) opening in opposite directions, **characterised in that** the fuel tank comprises an inerting device according to any one of claims 1 to 6, the first downstream end (4) of the transfer circuit being coupled to the main vessel (2) and the second downstream end (5) of the transfer circuit being coupled to the overflow space (3).

7. Tank according to claim 6, **characterised in that** the overflow space (3) communicates with the exterior of the tank via an inlet check valve (11) designed to open only when the pressure differential between, on the one hand the interior (P3) of the overflow space (3) and on the other hand the exterior (PA) of the tank reaches a predetermined level of opening (Y), and **in that** the electronic logic unit (8) is configured so as to control the supply of a nitrogen-enriched gas flow to the overflow space (3) via the second downstream end (5) when the pressure differential (PA-P3) between, on the one hand the interior of the overflow space (3) and on the other hand the exterior is between 70% and 100% of said level of opening (PA-P3>70%Y).

8. Tank according to claim 7, **characterised in that** the electronic logic unit (8) is configured so as to control the supply of a nitrogen-enriched gas flow to the overflow space (3) via the second downstream end (5) when the pressure differential (P3-Pa) between, on the one hand the interior of the overflow space (3) and on the other hand the exterior of the tank approaches 50 mbar or reaches the level sufficient for opening the inlet check valve (11).

9. Tank according to any one of claims 6 to 8, **characterised in that** the sensor array (6, 7) for measuring information representative of the pressure differential (P3-Pa) between, on the one hand the interior of the overflow space (3) and on the other hand the exterior of the tank, comprises at least one pressure sensor.

10. Aircraft comprising a fuel tank according to any one of claims 6 to 8, **characterised in that** the sensor array (6, 7) for measuring information representative of the pressure differential (P3-Pa) between, on the one hand the interior of the overflow space (3) and on the other hand the exterior of the tank, comprises at least one of the following: a differential pressure sensor, a pair of pressure sensors, an aircraft altitude sensor, a sensor for detecting the atmospheric pressure around the aircraft, a sensor for detecting the atmospheric temperature around the aircraft, a sensor for detecting the rate of descent of the aircraft, a sensor for detecting the fuel consumption of the aircraft, a sensor for detecting the pressure of the air intake supplying the generator for its enrichment with nitrogen, a sensor for detecting the temperature of the air intake supplying the generator for its enrichment with nitrogen, a sensor for detecting the flow rate of the nitrogen-enriched gas at the outlet of the generator, a sensor for detecting the concentration of oxygen/nitrogen in the flow of nitrogen-enriched gas at the outlet of the generator (1), a sensor for detecting the flow rate of the nitrogen-enriched gas at the outlet of a buffer tank storing the nitrogen-enriched gas produced by the generator (1), a sensor for detecting the concentration of oxygen/nitrogen in the flow of nitrogen-enriched gas at the outlet of a buffer tank storing the nitrogen-enriched gas produced by the generator (1).

11. Method for inerting a pressurised aircraft fuel tank, i.e. for a tank provided with a main vessel (2) and a separate pressurised overflow space (3), wherein inerting takes place via an inerting device comprising a generator (1) for generating nitrogen-enriched gas, the method including a step of determining a pressure differential (P3-Pa) between, on the one hand the interior of the overflow space (3) and on the other hand the exterior of the tank, and, when said pressure differential (P3-Pa) drops below a predetermined threshold S, a step of transferring a flow of nitrogen-enriched gas into the overflow space (3).
